# EUROPEAN PATENT SPECIFICATION

(11) **EP 3 383 804 B1**
(45) Date of publication and mention of the grant of the patent: **11.11.2020**
(21) Application number: 16871157.0
(22) Date of filing: 01.12.2016
(51) Int. Cl.: C02F 1/52, B01F 1/00, B01D 37/02, B01D 21/01, B01D 29/27, B01D 29/52, B01D 29/90, E03F 5/00

(54) **A STORMWATER TREATMENT APPARATUS, METHOD AND SYSTEM**
REGENWASSERBEHANDLUNGSVORRICHTUNG, -VERFAHREN UND -SYSTEM
APPAREIL, PROCÉDÉ ET SYSTÈME DE TRAITEMENT DES EAUX DE PLUIE

(30) Priority: 02.12.2015 SE 1551576
(43) Date of publication of application: 10.10.2018
(73) Proprietor: Swedish Hydro Solutions AB, 441 60 Alingsås (SE)
(72) Inventor: MACPHERSON, John, Woodinville Washington 98077 (US); SJÖBERG, Jacob, 412 60 Göteborg (SE); LINDQVIST, Anders, 441 60 Alingsås (SE)
(74) Representative: AWA Sweden AB
(86) International application number: PCT/SE2016/051198
(87) International publication number: WO 2017/095315

(56) References cited:
- WO-A1-2015/025352
- US-A1- 2003 136 719
- US-A1- 2008 023 408
- US-A1- 2009 145 829
- US-B1- 6 749 748
- US-B1- 8 518 268
- John Macpherson: "Storm-Klear(TM) (Chitosan) Toxicity and Applications Construction Stormwater Treatment Natural Site Solutions, LLC", , 21 October 2004 (2004-10-21), XP055582080, Retrieved from the Internet: URL:https://www.waterboards.ca.gov/water_i ssues/programs/stormwater/docs/advtreat/na turalsitesolutions.pdf [retrieved on 2019-04-17]

## Description

### TECHNICAL FIELD OF THE INVENTION

The present invention relates to a system and method for reducing the amount of fine particles and contaminants in water, more specifically it relates to an apparatus for stormwater treatment.

### BACKGROUND

Stormwater, sometimes referred to as stormwater runoff, can have a hazardous impact on water quality, especially stormwater from construction activities. As the stormwater flows over a site, it can collect pollutants/contaminants like sediment, debris and chemicals. These are then transported to a nearby storm sewer system or directly to a natural gathering point like a river, lake or coastal water. Contaminated stormwater can harm or even kill fish and other wildlife, moreover, sedimentation can destroy aquatic habitats by reducing the amount of sunlight reaching aquatic plants.

The globally increasing environmental awareness together with the growing knowledge regarding the hazardous effects associated with water contamination has resulted in public authorities all around the world enforcing stricter requirements (e.g. The Clean Water Act in the U.S.) regarding stormwater management. This puts a lot of pressure on many industries, such as e.g. the construction industry, the mining industry, the marina industry, etc. In addition to the requirements regarding contamination levels (i.e. degree of cleanliness), there are many problems associated with the large volumes of water that must be processed, which sets strict demands on treatment techniques and efficiency.

An often applied method for stormwater management at construction sites includes excavating a trench or a gutter and then placing sacks or bags containing a polymeric filter material in the trench or gutter. Ideally, the stormwater is treated when it flows through the trench and simultaneously gets in contact with the filter material which purifies the stormwater and/or removes contaminants by reacting with the stormwater and thereby forming larger particles which sink to the bottom of the trench or are removed by mechanical means. The polymeric filter material may comprise chitosan which is a natural and biodegradable flocculent or coagulant and can be extracted from the exoskeleton of crustaceans (such as crabs and shrimp). This method may however be both expensive and labor intensive, and furthermore it may not even always be applicable in all situations since it is rather dependent on the area surrounding the site.

US 6749748 discloses a method and apparatus for treatment of water with e.g. chitosan, where the chitosan is arranged in a purification unit, having a body with a multiplicity of pores. The presentation "Storm-Klear™ (Chitosan) Toxicity and Applications - Construction Stormwater Treatment" by John Macpherson discusses various ways to use chitosan in treatment of stormwater.

An alternative method for stormwater management is to pump the stormwater into tankers or tanker trucks which in turn transport the contaminated water to a water treatment facility. However, this method is often very inefficient and costly.

There is therefore a need for an improved method and system to facilitate stormwater treatment, which is easy to operate, cost-efficient and furthermore provides for efficient water purification, in particular at industrial areas or any other areas of operation in need of stormwater treatment.

### SUMMARY OF THE INVENTION

It is therefore an object of the present invention to provide a water treatment apparatus, a method for controlling a dissolution rate of a water-soluble flocculating agent in stormwater and a water treatment system for stormwater treatment, which alleviates all or at least some of the above-discussed drawbacks of the presently known systems.

This object is achieved by means of a water treatment apparatus, a method and a water treatment system as defined in the appended claims.

According to a first aspect of the present invention, there is provided a water treatment apparatus for stormwater treatment, where the water treatment apparatus comprises:
a receiving pan comprising:
   an inlet port in order to receive a flow of stormwater;
   a contact surface for supporting at least one purification unit having a body defining a plurality of pores and containing a water-soluble flocculating agent; at least one securing element for fastening the at least one purification unit, wherein the water treatment apparatus further comprises:
a receiver tank arranged to receive treated water which has passed through said receiving pan on the contact surface; and
a tilting structure, in order to set an inclination of the contact surface relative to a horizontal plane and thereby control a dissolution rate of the flocculating agent when the flow of stormwater is flowing through said receiving pan on said contact surface. Hereby a simple and cost-efficient stormwater treatment apparatus is provided.

The "stormwater" (or sometimes referred to as stormwater runoff), is in the present context to be understood as contaminated or polluted water containing sediments. The flow of stormwater may also be called a stream of stormwater, and may be continuous, discrete or a combination thereof. The flow/stream may also have a constant flow rate, or a flow rate which varies over time.

The receiving pan is a vessel acting as an initial stage through which stormwater may flow, and also as a treatment stage having a contact surface on which a set of purification units or bags are placed in the way of the flow in order to disperse an amount of a flocculating substance into the stormwater in order to treat it.

Further, the water treatment apparatus can be a passive water treatment apparatus in such a way that it does not require the ongoing addition of any chemical reagents to conduct treatment. Instead, it is preferred that the addition of the flocculating substance is provided passively, by letting the water flow over the passive units comprising the flocculating substance.

Even further, the water treatment apparatus according to this first aspect of the invention is suitable for on-site water treatment, since it versatile and reliable, and easy to operate. It can also easily be made rather mobile and portable, so that it can be transported on a trailer, in a trunk of a large car or such.

The water-soluble flocculating agent/substance may comprise a chitosan salt, such as e.g. chitosan lactate, chitosan glutamate, chitosan acetate, chitosan citrate, etc. In the present context the term flocculating agent includes coagulating agents. Moreover, the purification unit body may be made from any material that is sufficiently strong to retain the flocculating agent and to resist the forces exerted by water moving over the unit, and at the same time having pores ensuring water permeability for allowing water to penetrate the device to contact the flocculating agent, however, the pores are not so large so as to permit rapid escape and dissolution of the flocculating agent. Suitable materials for making the device body may be fabric, e.g. made of silk, wool, cotton, nylon, polyester, etc. The material may be a woven material or a non-woven material.

The present invention is based on the realization that the dosage of a flocculating agent (or flocculant) during treatment of stormwater can be controlled by controlling the behavior of the stormwater flow around the purification units rather than actively controlling the amount of flocculating agent introduced into an amount of stormwater. Furthermore, by configuring a surface that is tiltable in reference to a horizontal plane, or in some contexts, pivotable around an axis transverse to the direction of a water flow on this surface, it becomes possible to control the turbulence in the flow of stormwater, and thereby effectively controlling the dissolution rate of the flocculating agent, which consequently provides swift and cost-efficient control of the dosage. Thus, instead of utilizing complicated dosing structures/devices, the present invention offers a simple mechanical structure that is easy to operate and maintain.

In one exemplary embodiment the receiving pan of the water treatment apparatus further comprises at least one, and preferably a set, of movable diverter arm(s) for directing the flow of stormwater. The flow of stormwater can then be channeled over the purification units in a more controlled fashion. This allows for improved control and even more efficient stormwater treatment since the flow of stormwater can be properly directed in order to ensure a desirable dissolution rate of the flocculating agent. The diverter arm(s) consequently add an extra dimension in controlling the dissolution rate of the flocculating agent.

In another exemplary embodiment the water treatment apparatus further comprises a discharge pump for transporting the treated water out from said receiver tank, and e.g. to an external location, such as e.g. a settling tank, biofiltration, sand filtration, etc. It is to be understood that the receiver tanks may in some embodiments be a settling tank where the sediment is allowed to settle at the bottom so that it can be separated from the purified water. However, in some situations there might be a need for a larger settling tank, therefore the water treatment apparatus may be arranged with a discharge pump placed inside the receiver tank. The discharge pump may also be a submersible discharge pump.

In another exemplary embodiment the receiver tank comprises a stirring device in order to mix the received treated water. This facilitates the sampling of the treated water in order to check if the dosage of the flocculating agent is satisfactory or if it needs to be altered. The dosage can then be altered as mentioned by adjusting the inclination of the contact surface relative a horizontal plane. Moreover, the stirring device ensures proper mixing of the flocculating substance into the contaminated/turbid water and thus ensures that it is uniformly spread within the whole volume. Additionally it ensures that there is no sediment sinking to the bottom of the receiver tanks if the receiver tank is not intended to be used as a settling tank. However, the stirring device is optional, and receiver tanks with other types of mechanical or non-mechanical stirrers are feasible, or without any stirring at all.

In yet another exemplary embodiment, the water treatment apparatus may further comprise a control unit and a sensor, such as an optical sensor, in operable connection to the control unit. The sensor may e.g. be configured to detect a turbidity level of the stormwater, and can e.g. be located in proximity to the inlet port. The control unit is preferably configured to retrieve data comprising information regarding said turbidity level from the optical sensor. Hereby, an operator or user may be provided with measurement data regarding the turbidity level of the injected stormwater (via e.g. a user interface), and may adjust dosage of flocculating agent by controlling the dissolution rate appropriately. Thus, the whole water treatment process can be facilitated and made more time efficient since optimization of the process can be made without collection of samples before and/or after the water has been treated, or the like, and adjustment of the dissolution rate can also be made repeatedly or continuously. The dosage may be controlled by adjusting the inclination of the contact surface and/or by adjusting the number of purification units present on the contact surface. Alternatively, or in addition to the sensor located at or near the inlet port, the apparatus may comprise a sensor suitably positioned in the receiving pan, in the retrieving tank and/or in the settling tank for checking the turbidity level of the treated water. Similarly this second sensor may be in operable connection with the control unit and function in the same or similar ways as the first optical sensor. Additionally or alternatively, the control unit may also control the dosage directly (see below).

The sensor can be an optical sensor, measuring e.g. the turbidity by measuring transmission of light through the water, e.g. in accordance with the so-called Jackson Candle method (unit: Jackson Turbidity Unit, JTU). However, optical sensors measuring reflected, scattered light are also feasible, e.g. in accordance with the so-called Formazin Turbidity Unit (FTU), and in accordance with ISO 7027:1999. However, other sensors, e.g. measuring transmission or reflection of electromagnetic radiation at other wavelengths, such as infrared light, ultraviolet light, microwaves, etc. may also be used to determine turbidity, and it is also possible to measure other parameters to determine the quality of the stormwater, and the required dosage of flocculation agent, such as the concentration of particles of certain contaminant or pollution substances, etc.

In yet another exemplary embodiment, the water treatment apparatus further comprises a control unit that is in operable connection with an actuating device which in turn is arranged to act on the contact surface, in order to adjust the inclination of the contact surface based on input from said control unit. The actuating device can be arranged to act directly on the contact surface in some embodiments, or it can be arranged to act indirectly on the contact surface, e.g. by being in contact with the whole receiving pan, and thereby controlling the inclination of the complete receiving pan. The control of the inclination is hereby facilitated as it can be done simply by operating the control unit (via e.g. a user interface) instead of manually adjusting the inclination. Furthermore it further allows for more advanced control of the water treatment apparatus as the control unit can be provided with the appropriate software and/or hardware in order to be configured to operate based on a set of predefined parameters which are programmable into the control device.

Thus, the water treatment apparatus of the present invention can be operated manually, requiring manual determination of when there is a need for adjustment of the dosage, and a manual operation to effect said adjustment. However, the water treatment apparatus may instead be semiautomatic or automatic, doing one or both of the steps of identifying the need for adjustment and effecting the adjustment in an automated fashion.

Moreover the control unit may be further configured to control said actuating device based on said retrieved information from said sensor regarding said turbidity level. The retrieved information can be from any one or all of the sensor(s) provided in the apparatus. Thereby further facilitating the operation of the apparatus.

According to another aspect of the present invention there is provided a method for controlling a dissolution rate of a water-soluble flocculating agent in stormwater, said method comprising the steps of:
providing a water treatment apparatus according to any one of the preceding claims and at least one purification unit having a body defining a plurality of pores and containing the water-soluble flocculating agent;
positioning said at least one purification unit on the contact surface and fastening said at least one purification unit to said at least one securing element;
providing a flow of stormwater to said inlet port;
controlling the inclination of said contact surface in reference to a horizontal plane in order to control a dissolution rate of the flocculating agent when said flow of stormwater is flowing through said receiving pan on said contact surface.

With this aspect of the invention, similar advantages and preferred features are present as in the previously discussed first aspect of the invention.

According to yet another aspect of the present invention there is provided a water treatment system for stormwater treatment, said water treatment system comprising:
a receiving pan arranged to receive a flow of stormwater, said receiving pan comprising a contact surface and at least one securing element;
at least one purification unit having a body defining a plurality of pores and containing a water-soluble flocculating agent, said at least one purification unit being arranged on said contact surface and attachable to said securing element;
a receiver tank arranged to receive treated water which has passed along and in contact with said at least one purification unit on said contact surface;
a tilting structure, in order to set an inclination of said contact surface relative to a horizontal plane and thereby control a dissolution rate of the flocculating agent when said flow of stormwater is passing along and in contact with said at least one purification unit on said contact surface.

In one exemplary embodiment the water treatment system may comprise at least one pH increasing unit having a body defining a plurality of pores and containing sodium bicarbonate, said at least one pH increasing unit being located in the receiver tank. This is in order to control the pH of the stormwater towards a more neutral value, which may be of advantage both for environmental reasons and also in order to optimize the effect of the flocculating agent.

With this aspect of the invention, similar advantages and preferred features are present as in the previously discussed first aspect of the invention and vice versa.

These and other features and advantages of the present invention will in the following be further clarified with reference to the embodiments described hereinafter.

### BRIEF DESCRIPTION OF THE DRAWINGS

For exemplifying purposes, the invention will be described in closer detail in the following with reference to embodiments thereof illustrated in the attached drawings, wherein:
Fig. 1 shows a partly exploded perspective view of a water treatment system in accordance with an embodiment of the present invention.
Fig. 2 shows a perspective view of a water treatment apparatus during use in accordance with an embodiment of the present invention.
Fig. 3 shows a perspective view of a water treatment system in accordance with another embodiment of the present invention.
Fig. 4 shows a perspective view of a water treatment apparatus in accordance with an embodiment of the present invention.
Figs. 5a-b show a side-view of a water treatment apparatus in accordance with an embodiment of the present invention.
Fig. 6 shows a perspective view of a water treatment apparatus in accordance with yet another embodiment of the present invention.

### DETAILED DESCRIPTION

In the following detailed description, some embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

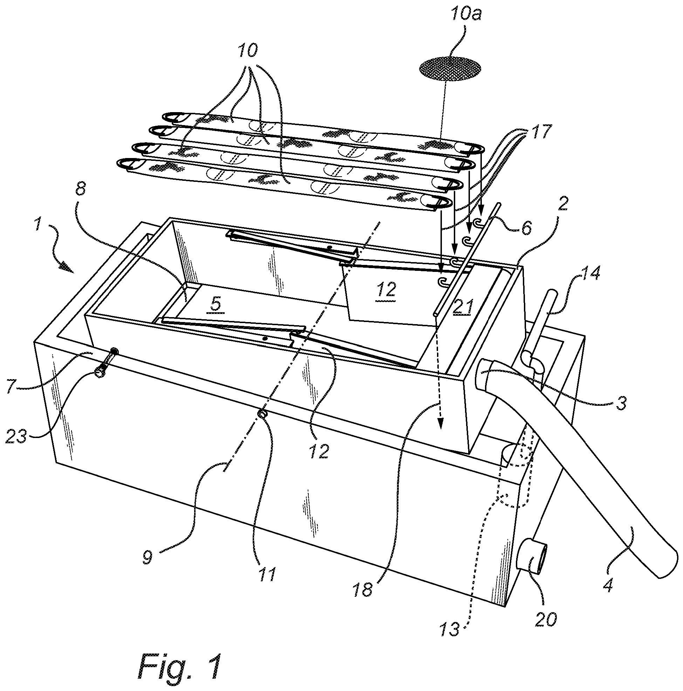

In Fig. 1, a perspective view of a water treatment apparatus 1 with a set of purification units 10 is illustrated. The water treatment apparatus 1 has a receiving pan 2. The receiving pan 2 embodies an initial stage of the water treatment apparatus, where contaminated/turbid water, called stormwater in the following, is provided via an inlet port 3 at the receiving pan 2. The inlet port 3 may be an NPT (national pipe thread) female/male connection of a suitable size, e.g. 2", 3", 4", etc. into which a pipe 4 or tube 4 with a corresponding male/female connection may be attached. The receiving pan 2 further has a contact surface 5 for supporting the purification units 10 which are to be placed on the contact surface 5 when the apparatus is in use. Each purification unit 10 has a body defining a plurality of pores (as indicated by the magnification 10a), for example any suitable fabric, and contains a water soluble flocculating agent, e.g. in the form of a powder or gel. The flocculating agent contained in the purification units 10 can for example be Chitosan Lactate dry flakes. The purification units are preferably provided in the form of elongate bags, e.g. in the shapes of sausages or cucumbers, and are preferably provided with a hook, loop or the like in at least one end.

As indicated by the arrows 17 the purification units 10 may be fastened to a set of securing elements 6 in the receiving pan 2. The securing elements 6, here in the form of hooks 6, are located in the receiving pan 2 but have been extracted (as indicated by arrow 18) for clarifying reasons. The purification units 10 are then held securely in position on the contact surface 5 when a flow of stormwater is injected via the inlet port 3. The flowing stormwater in turn dissolves at least a portion of the flocculating agent when it runs along and in contact with the purification units 10 located on the contact surface 5. The treated water (treated in the context that it now contains a concentration of a flocculating substance obtained from the water-soluble flocculating agent) subsequently flows into a receiver tank 7. The treated water enters the receiver tank 7 through an opening 8, here in the form of a chute or gutter, provided on the contact surface 5 of the receiving pan 2, and at a distance from the inlet 3, and preferably in an end being opposite to the inlet end.

The receiver tank 7 further has a drain port 20 for drainage.

Furthermore, the water treatment apparatus 1 has a tilting structure 11 enabling the contact surface 5 to be inclined (or tilted) relative a horizontal plane. In this particular embodiment the receiving pan 2 is suspended by cylindrical attachments 11 at each sidewall which allows the whole receiving pan 2 to at least partly pivot/rotate around an axis 9 in order to set a tilting angle of the contact surface 5. The pivot axis 9 is preferably substantially perpendicular to the direction of the flow of stormwater when the apparatus 1 is in use. By controlling the inclination of the contact surface 5 relative a horizontal plane one can control the dissolution rate of the flocculating agent contained in the purification units 10. A larger inclination of the contact surface relative to a horizontal plane creates more turbulence in the flow of stormwater which increases the dissolution rate of the flocculating agent in comparison to a smaller angle, i.e. a reclined (nearly horizontal) position. The apparatus 1 may also comprise a locking unit 23, here in the form of a threaded bolt pressing against the receiving pan 2, in order to fixate/lock the desired inclination angle of the contact surface 5. For example the contact surface 5 may be locked at any inclination angle relative to a horizontal plane from 0 degrees 60 degrees, preferably between 0 degrees and 45 degrees, and most preferably between 0 degrees and 35 degrees. Thus, depending on how contaminated or how turbid the stormwater is an operator can appropriately adjust the inclination of the contact surface 5.

However, the apparatus 1 may be configured in alternative ways in order to achieve the desired effect, i.e. the "tilt" or "inclination" of the contact surface may be controlled in other ways in other embodiments of the invention. For example, the contact surface 5 may be movable relative to the receiving pan 2 and accordingly the contact surface 5 may be arranged in various fixed positions in the receiving pan 2, e.g. arranged in guiding rails provided on the sidewalls of the receiving pan 2, where the guiding rails have different fixed inclination angles. Alternatively, the apparatus 1 may be provided with an inclination structure (not shown) in order to mount the whole receiving pan 2 at various fixed positions having different inclination angles relative to a horizontal plane. Even further, the contact surface 5 or the complete receiving pan 2 may be provided with hinges allowing them to have an adjustable inclination. Therefore, it is to be understood that the tilting structure 11 as illustrated in Fig. 1 is merely an example of several viable structural solutions allowing the contact surface's 5 inclination/tilting angle to be altered/controlled.

Further, the receiving pan need not be straight, with a flat bottom, but other shapes may be used as well. For example, the general shape of the receiving pan may be curved or bent, so that the inlet and outlet face different, non-parallel directions. Further, the bottom, forming the contact surface, may be non-straight, having a curvature in either the width or the length direction. For example, the contact surface may be curved in the width direction, thereby forming one or several groove(s) or channel(s) along the receiving pan. Additionally or alternatively, there may be a curvature in the length direction, forming e.g. small "ponds" along the contact surface, or formation of a generally corrugated surface.

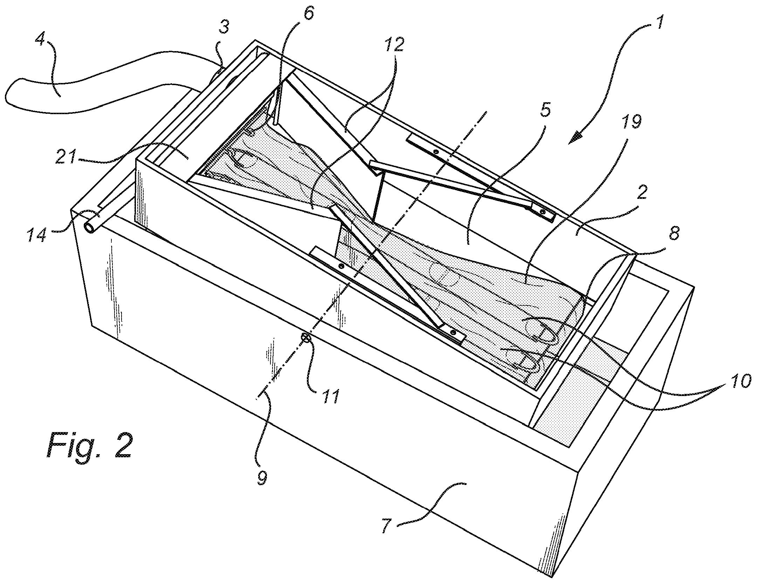

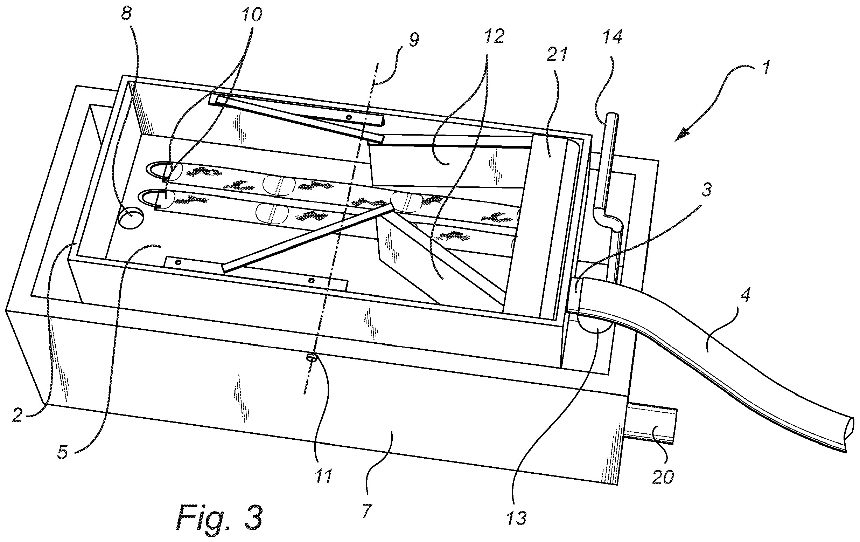

The water treatment apparatus 1 can further be provided with at least one, and preferably a set of at least two, diverter arm(s) 12 in the receiving pan 2; the diverter arm(s) 12 provide(s) means for controlling the flow of stormwater through the receiving pan 2. The functionality of the diverter arms 12 will be discussed in more detail in relation to Fig. 2 and Fig. 3.

Further, a submersible discharge pump 13 is illustrated in the receiver tank 7 of Fig. 1. The discharge pump 13 is to be used for transporting treated water out of the receiver tank 7 to a settling tank/settling pond (not shown) via some appropriately arranged pipes 14 or tubes 14. The treated water may also be pumped to a biofilter, cartridge filter, sand filter, etc. (not shown) via some appropriately arranged pipes 14 or tubes 14.

However, the receiver tank may also, in some applications, be used for settling, and if so, the pump may be used to drain cleaned and treated water and/or suspended sediment.

The dissolved flocculating agent coagulates the suspended sediment and other contaminants in the stormwater and then enters into the receiver tank 7. The submersible discharge pump 13 then pumps the treated water to a settling tank where the sediment is allowed to settle to the bottom or it pumps the treated water to/through an appropriate filter. Coagulation can be defined as "to gather together or form into a mass or group". For the present context it means to gather together tiny suspended sediment particles in water so that they form big enough particles to either settle or be filtered. Chitosan is very effective as a coagulant and is natural and biodegradable. On a chemical level, a majority of suspended particles are negatively charged and therefore repel one another. Because of its strong positive charge and long molecular chain, chitosan is adsorbed onto many suspended particles. The treated particles are said to be electro-statically destabilized, i.e. they have partial opposite charges, which causes them to rapidly coalesce into a large mass.

In some situations there might be a need to increase the pH of the stormwater, e.g. acid rain or acidic soils may cause stormwater to have a pH below 6,5. In order to do this one may provide a pH increasing unit (not shown), similar in construction to the purification units 10, but containing sodium bicarbonate instead of a water-soluble flocculating agent, arranged on the contact surface 5. The pH increasing unit may alternatively be positioned inside the receiver tank, e.g. fastened with some securing element (hook, clamp, etc.).

In Fig. 2 the water treatment apparatus 1 is shown during use, i.e. when there is a flow of stormwater 19 injected into the receiving pan 2 via the inlet port 3. The stormwater 19 may be pumped into the receiving pan 2 from e.g. a collection pond (not shown) and transported via an appropriately arranged pipe 4. The apparatus 1 follows the same operational principle as discussed in reference to Fig. 1 and the same structural features are indicated with the same reference numbers; however, in this illustration the function of the diverter arms 12 is further elucidated.

In some situations one may not need/want to arrange enough purification units 10 to cover the full width of the contact surface 5 of the receiving pan 2. For example if the stormwater 19 is not contaminated or turbid enough so as to require a high dose of flocculating agent, then one may only need one or possibly two purification units 10 in order to treat the stormwater 19. In those scenarios where there are only one or two purification units 10 in use, the diverter arms may be used to direct the flow of stormwater 19 so that it runs under, over and right next to the purification units. In order to avoid a large amount of stormwater 19 not being exposed to the flocculating agent in the purification units 10. Moreover, the diverter arms 12 therefore effectively increase the dissolution rate of the flocculating agent by forcing a larger amount of water to get in contact with the purification unit(s) 10 and consequently to dissolve more of the water-soluble flocculating agent. Thus, it can be said that the diverter arms 12 increase the efficiency of the apparatus 1 and improved the control of the dissolving by restricting the dimensions around part or all of the units containing the flocculation agent.

In the illustrative embodiment discussed above, one diverter arm is provided, being arranged on opposite sides of the receiver pan. However, it is also possible to use only one diverter arm, or two diverter arms arranged on the same side of the receiver pan. Still further, it is also possible to use more than two diverter arms, arranged on the same or different sides. Still further, other possibilities for restricting the cross-sectional dimensions and the flow are also feasible.

Fig. 3 illustrates a similar water treatment apparatus 1 as the one discussed in reference to Figs. 1-2 from a perspective view. This particular embodiment illustrated in Fig. 3 further shows the function of the diverter arms 12 in the receiving pan 2. Here one can see that the diverter arms 12 may be used to direct the flow of stormwater when the purification units 10 are asymmetrically placed on the contact surface 5, i.e. not centered. Moreover, the receiving pan further comprises a splashguard or a fender 21 which is used in order to further optimize the flow of stormwater so that it runs along the majority of the length of the contact surface instead of possibly "over shooting", and to protect operators from splashing if the stormwater would be introduced under high pressure into the receiving pan.

The contact surface 5 has an opening 8 for allowing the treated stormwater to flow down into the receiver tank 7, here in the form of a circular hole 8. The apparatus 1 in Fig. 3 generally follows the same operational principle as discussed in reference to Figs. 1-2 and the structural features which are the same or serve similar functions are indicated with the same reference numbers.

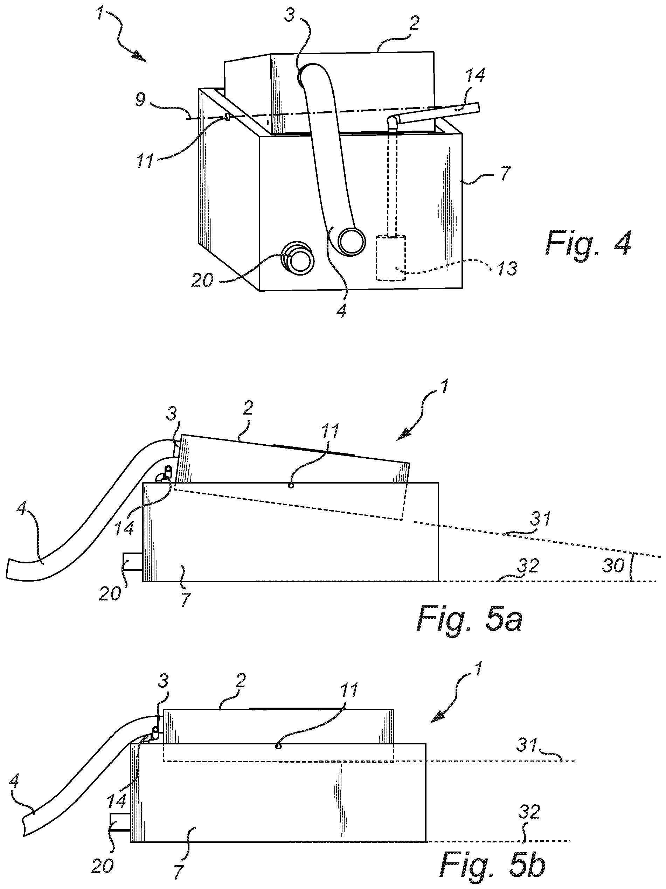

Fig. 4 is a perspective view illustration of a water treatment apparatus 1 in accordance with an exemplary embodiment of the invention; more specifically it shows the side comprising the inlet port 3 and the drain port 20, referred to as the "back side" in the following. The inlet port 3 serves for attachment of a matching tube 4 or pipe 4 in order to pump stormwater into the receiving pan 2. The receiver tank 7 is further equipped with a drain port in order enable drainage of the receiver tank 7. This perspective drawing also further illustrates the setup with a discharge pump 13 located within the receiver tank. The discharge pump 13 may be a submersible pump in order to facilitate the handling of the system. Suitable tubing 14 or piping 14 is attached to the discharge pump 13 and connected to e.g. a settling tank (not shown), where the treated stormwater may settle, i.e. the flocculated sediment can be allowed to settle at the bottom of a tank or pod where it later may be separated from the water. The figure also illustrates how the receiving pan may be tilted during use in order to control the inclination of the contact surface and thereby the dissolution rate of the flocculating agent.

Figures 5a and 5b serve to further elucidate the tilting feature of the contact surface, which involves tilting the complete receiving pan 2 in this particular embodiment, in order to control the dosage of flocculating agent into the stormwater. Similar to the embodiments discussed in reference to Figs. 1-4 the water treatment apparatus 1 has a tilting structure 11 in the form of a rotational suspension 11 allowing the receiving pan to pivot around an axis 9. Here the axis 9 is substantially centrally placed along a longitudinal axis of the contact surface. However, it is readily understood by the skilled artisan that the pivoting axis 9 may be arranged at any position along the longitudinal axis of the contact surface.

The apparatus 1 may further be provided with some locking unit in order to hold the receiving pan in the desired angle 30 relative the horizontal plane, here indicated by two dashed lines 31, 32. The locking unit may be any suitable structure as known in the art, e.g. a threaded bolt pressing against a portion of the receiving pan 2, a strap, or a suitably arranged rod (e.g. going through the receiver tank 7 from side-to side and supporting a bottom surface of the receiving pan 2 at different vertical positions). Alternatively the pivoting structure 11 may have high enough inertia for the inclination of the receiving pan 2 to be stable without an additional locking structure. As previously mentioned, a steeper inclination of the contact surface, which supports the purification units, causes more turbulence in the flow of stormwater under, on and along the purification units which increases the dissolution rate of the flocculating agent. Thus, setting the position as in Fig. 5a, where the contact surface is inclined in reference to a horizontal plane has a higher dissolution rate of flocculating agent when in use than the setup illustrated in Fig. 5b. The dissolution rate is configured according to particular situations and applications, i.e. configured appropriately in reference to the contamination level and/or turbidity of the stormwater that is pumped into the apparatus 1. In other words, for higher contamination levels of the stormwater, a larger inclination angle should be set. In addition to controlling the dosage of flocculating agent by altering the inclination angle 30 of the contact surface 5, one may increase or decrease the number of purification units present on the contact surface, i.e. in order to increase the dosage level of flocculating agent in the treated stormwater one can add purification units on the contact surface 5. A further possibility is, as discussed in the foregoing, to use diverter arms to expand or restrict the cross-sectional dimensions of the receiver pan.

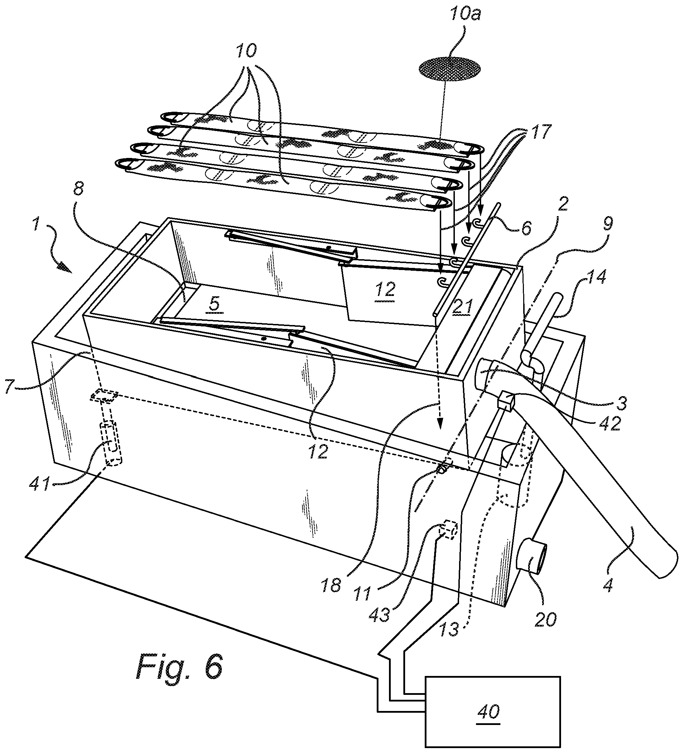

Fig. 6 illustrates another exemplary embodiment of the water treatment apparatus 1 from a perspective view. In this embodiment the apparatus 1 is provided with an actuating device 41, which is to be understood as a type of motor that is responsible for moving or controlling a mechanism. It is operated by a source of energy, typically electric current, hydraulic fluid pressure, or pneumatic pressure, and converts that energy into motion. The actuating device 41 is arranged to control the inclination of the contact surface 5 by acting directly or indirectly on the contact surface 5, depending on the type of tilting structure utilized. In this particular embodiment the actuating device 41 is arranged to act on the receiving pan 2 and thereby adjust the inclination of the contact surface 5. Furthermore it can be seen that the tilting structure 11, (can also be called pivoting structure 11) has been moved towards a back end of the receiving pan. This further elucidates the fact that the axle 11 around which the contact surface 5 or receiving pan 2 can be pivoted or tilted can be arranged at various positions along the contact surface 5 or receiving pan 2, depending on desired application and other circumstances.

Furthermore the apparatus may be provided with a sensor 42, such as an optical sensor, arranged in proximity to the inlet port 3. The sensor 42 can be used to determine the turbidity level or clarity of the incoming stormwater. This information may then be retrieved by a control unit 40, which is in operable connection to the sensor 42. Furthermore, an alternative or additional placement of a sensor 43 may be in the receiver tank 7. This sensor can be used to check the turbidity level or clarity of the treated water, for example, if the receiver tank 7 is used as a settling tank and the sediment is allowed to settle to the bottom, then e.g. an optical sensor 43 may be used to check the clarity of the cleared water in order to facilitate the determination if the dissolution rate of the flocculating agent was at a satisfactory level. All of this information (sensor data) may be retrieved by the control unit 40 which then appropriately may adjust the inclination of the control surface 5 based on this information, in an automated or semi-automated fashion.

The invention has now been described with reference to specific embodiments. However, several variations of the water treatment apparatus are feasible. For example, the stormwater may be pumped in directly from a tube or hose simply arranged with its outlet entering through the top of the receiving pan. Further, the tilting structure and the locking unit may be realized in many different conventional ways, as already exemplified. Such and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A water treatment apparatus (1) for stormwater treatment, said water treatment apparatus comprising:
a receiving pan (2) comprising:
an inlet port (3) in order to receive a flow of stormwater;
a contact surface (5) for supporting at least one purification unit (10) having a body defining a plurality of pores and containing a water-soluble flocculating agent;
at least one securing element (6) for fastening said at least one purification unit (10), wherein the water treatment apparatus further comprises:
a receiver tank (7) arranged to receive treated water which has passed through said receiving pan (2) on said contact surface; and
a tilting structure (11), in order to set an inclination of said contact surface (5) relative to a horizontal plane and thereby control a dissolution rate of the flocculating agent when said flow of stormwater is flowing through said receiving pan on said contact surface (5).

2. The water treatment apparatus according to claim 1, wherein said receiving pan (2) further comprises at least one, an preferably a set of, movable diverter arm(s) (12) for directing said flow of stormwater.

3. The water treatment apparatus according to claim 1 or 2, further comprising a discharge pump for transporting the treated water from said receiver tank (7), e.g. to an external location.

4. The water treatment apparatus according to claim 3, wherein said discharge pump is a submersible pump (13) located in the receiver tank (7).

5. The water treatment apparatus according to any one of the preceding claims, wherein said receiver tank (7) comprises a stirring device in order to mix the received treated water.

6. The water treatment apparatus according to any one of the preceding claims, further comprising a control unit (40) and a sensor (42), such as an optical sensor, in operable connection to the control unit (40), wherein said sensor (42) is located in proximity to said inlet port (3) and is configured to detect a turbidity level of the stormwater, and wherein said control unit (40) is configured to retrieve data comprising information regarding said turbidity level from the sensor (42).

7. The water treatment apparatus according to any one of the preceding claims, further comprising an actuating device (41), wherein said actuating device is arranged to act on said contact surface (5), in order to adjust the inclination of the contact surface (5).

8. The water treatment apparatus according to claim 7, wherein the actuating device (41) is in operable connection with the control unit (40), said actuating device (41) being arranged to act on said contact surface (5) based on input from said control unit (40).

9. The water treatment apparatus according to claim 7 or 8 as dependent on claim 7, wherein said control unit (40) is further configured to control said actuating device (41) based on said retrieved information from said sensor (42) regarding said turbidity level.

10. A water treatment system for stormwater treatment, said treatment system comprising: a water treatment apparatus (1) in accordance to any one of the previous claims; and
at least one purification unit having a body defining a plurality of pores and containing a water soluble flocculating agent, said at least one purification unit being arranged on said contact surface and attached to said securing element;
a settling tank; and
a discharge pump for transporting the treated water from said receiver tank (7) to said settling tank.

11. The water treatment system according to claim 10 further comprising at least one pH increasing unit having a body defining a plurality of pores and containing sodium bicarbonate, said at least on pH increasing unit being located in the receiver tank (7).

12. Method for controlling a dissolution rate of a water-soluble flocculating agent in stormwater, said method comprising the steps of:
providing a water treatment apparatus (1) according to any one of the claims 1-9 and at least one purification unit (10) having a body defining a plurality of pores and containing the water-soluble flocculating agent;
positioning said at least one purification unit (10) on the contact surface (5) and fastening said at least one purification unit (10) to said at least one securing element (6);
providing a flow of stormwater to said inlet port (3);
controlling the inclination of said contact surface (5) in reference to a horizontal plane in order to control a dissolution rate of the flocculating agent when said flow of stormwater is flowing through said receiving pan (2) on said contact surface (5).

13. The method according to claim 12, wherein the water treatment apparatus further comprises at least one, and preferably a set of, diverter arm(s) (12), and wherein the method further comprises the step of:
positioning the diverter arm(s) (12) in order to direct the flow of stormwater.

14. The method according to any one of the claims 12 and 13, wherein said flocculating agent comprises chitosan salt.

## Patentansprüche

1. Wasseraufbereitungsvorrichtung (1) zur Regenwasseraufbereitung, wobei die Wasseraufbereitungsvorrichtung umfasst:
eine Auffangwanne (2), umfassend:
eine Einlassöffnung (3), um einen Regenwasserfluss aufzunehmen;
eine Kontaktfläche (5) zum Tragen mindestens einer Reinigungseinheit (10) mit einem Körper, der eine Vielzahl an Poren definiert und ein wasserlösliches Flockungsmittel enthält;
mindestens ein Sicherungselement (6) zum Befestigen der mindestens einen Reinigungseinheit (10), wobei die Wasseraufbereitungsvorrichtung ferner umfasst:
einen Auffangbehälter (7), der angeordnet ist, um aufbereitetes Wasser aufzunehmen, das durch die Auffangwanne (2) auf der Kontaktfläche gelaufen ist; und
eine Kippstruktur (11), um eine Neigung der Kontaktfläche (5) relativ zu einer horizontalen Ebene einzustellen und dadurch eine Auflösungsrate des Flockungsmittels zu steuern, wenn der Regenwasserstrom durch die Auffangwanne auf der Kontaktfläche (5) fließt.

2. Wasseraufbereitungsvorrichtung nach Anspruch 1, wobei die Auffangwanne (2) ferner mindestens einen beweglichen Umlenkarm, vorzugsweise einen Satz beweglicher Umlenkarme (12) zum Leiten des Regenwasserstroms umfasst.

3. Wasseraufbereitungsvorrichtung nach Anspruch 1 oder 2, ferner umfassend eine Auslasspumpe zum Transport des aufbereiteten Wassers aus dem Auffangbehälter (7), z.B. an einen externen Ort.

4. Wasseraufbereitungsvorrichtung nach Anspruch 3, wobei die Auslasspumpe eine im Auffangbehälter (7) befindliche Tauchpumpe (13) ist.

5. Wasseraufbereitungsvorrichtung nach einem der vorhergehenden Ansprüche, wobei der Auffangbehälter (7) eine Rührvorrichtung umfasst, um das aufgenommene behandelte Wasser zu mischen.

6. Wasseraufbereitungsvorrichtung nach einem der vorhergehenden Ansprüche, ferner umfassend eine Steuereinheit (40) und einen Sensor (42), wie beispielsweise einen optischen Sensor, in betriebsfähiger Verbindung mit der Steuereinheit (40), wobei sich der Sensor (42) in der Nähe der Einlassöffnung (3) befindet und konfiguriert ist ein Trübungsniveau des Regenwassers zu erfassen, und wobei die Steuereinheit (40) konfiguriert ist, um Daten, die Informationen bezüglich des Trübungsniveaus enthalten, von dem Sensor (42) abzurufen.

7. Wasseraufbereitungsvorrichtung nach einem der vorhergehenden Ansprüche, ferner umfassend eine Betätigungsvorrichtung (41), wobei die Betätigungsvorrichtung so angeordnet ist, dass sie auf die Kontaktfläche (5) einwirkt, um die Neigung der Kontaktfläche (5) einzustellen.

8. Wasseraufbereitungsvorrichtung nach Anspruch 7, wobei die Betätigungsvorrichtung (41) in betriebsfähiger Verbindung mit der Steuereinheit (40) steht, wobei die Betätigungsvorrichtung (41) so angeordnet ist, dass sie, basierend auf der Eingabe von der Steuereinheit (40) auf die Kontaktfläche (5) einwirkt.

9. Wasseraufbereitungsvorrichtung nach Anspruch 7 oder 8, abhängig von Anspruch 7, wobei die Steuereinheit (40) ferner konfiguriert ist, um die Betätigungsvorrichtung (41) basierend auf den von dem Sensor (42) abgerufenen Informationen bezüglich des Trübungsniveaus zu steuern.

10. Wasseraufbereitungssystem zur Regenwasseraufbereitung, wobei das Aufbereitungssystem umfasst: eine Wasseraufbereitungsvorrichtung (1) gemäß einem der vorhergehenden Ansprüche; und
mindestens eine Reinigungseinheit mit einem Körper, der eine Vielzahl an Poren definiert und ein wasserlösliches Flockungsmittel enthält, wobei mindestens eine Reinigungseinheit auf der Kontaktfläche angeordnet ist und an dem Sicherungselement angebracht ist; ein Absetzbecken; und eine Auslasspumpe zum Transport des aufbereiteten Wassers von dem Auffangbehälter (7) zu dem Absetzbecken.

11. Das Wasseraufbereitungssystem nach Anspruch 10 umfassend ferner mindestens eine pH-erhöhende Einheit mit einem Körper, der deine Vielzahl an Poren definiert und Natriumbicarbonat enthält, wobei sich die mindestens eine pH-erhöhende Einheit im Auffangbehälter (7) befindet.

12. Verfahren zum Steuern einer Auflösungsrate eines wasserlöslichen Flockungsmittels in Regenwasser, wobei das Verfahren die folgenden Schritte umfasst:
Bereitstellen einer Wasseraufbereitungsvorrichtung (1) gemäß einem der Ansprüche 1 bis 9 und mindestens einer Reinigungseinheit (10) mit einem Körper, der wine Vielzahl an Poren definiert und das wasserlösliche Flockungsmittel enthält;
Positionieren der mindestens einen Reinigungseinheit (10) auf der Kontaktfläche (5) und Befestigen der mindestens einen Reinigungseinheit (10) an dem mindestens einen Sicherungselement (6);
Bereitstellen eines Regenwasserflusses zu der Einlassöffnung (3);
Steuern der Neigung der Kontaktfläche (5) in Bezug auf eine horizontale Ebene, um eine Auflösungsrate des Flockungsmittels zu steuern, wenn der Regenwasserstrom durch die Auffangwanne (2) auf der Kontaktfläche (5) fließt.

13. Verfahren nach Anspruch 12, wobei die Wasseraufbereitungsvorrichtung ferner mindestens einen Umlenkarm, und vorzugsweise einen Satz von Umlenkarmen (12) umfasst, und wobei das Verfahren ferner den Schritt umfasst:
Positionieren des Umlenkarms (der Umlenkarme) um den Regenwasserfluss zu lenken.

14. Verfahren nach einem der Ansprüche 12 und 13, wobei das Flockungsmittel Chitosansalz umfasst.

## Revendications

1. Appareil de traitement d'eau (1) pour le traitement des eaux pluviales, ledit appareil de traitement d'eau comprenant :
un bac de réception (2) comprenant :
un orifice d'entrée (3) pour recevoir un écoulement d'eaux pluviales ;
une surface de contact (5) pour supporter au moins une unité de purification (10) ayant un corps définissant une pluralité de pores et contenant un agent floculant hydrosoluble ;
au moins un élément de fixation (6) pour fixer ladite au moins une unité de purification (10), dans lequel l'appareil de traitement d'eau comprend en outre :
un réservoir récepteur (7) agencé pour recevoir de l'eau traitée qui a traversé ledit bac de réception (2) sur ladite surface de contact ; et
une structure basculante (11), afin de régler une inclinaison de ladite surface de contact (5) par rapport à un plan horizontal et de contrôler ainsi une vitesse de dissolution de l'agent floculant lorsque ledit écoulement d'eaux pluviales s'écoule à travers ledit bac de réception sur ladite surface de contact (5).

2. Appareil de traitement d'eau selon la revendication 1, dans lequel ledit bac de réception (2) comprend en outre au moins un, et de préférence un ensemble de bras de détournement mobiles (12) pour diriger ledit écoulement d'eaux pluviales.

3. Appareil de traitement d'eau selon la revendication 1 ou 2, comprenant en outre une pompe de décharge pour transporter l'eau traitée depuis ledit réservoir récepteur (7), par ex. vers un emplacement externe.

4. Appareil de traitement d'eau selon la revendication 3, dans lequel ladite pompe de décharge est une pompe submersible (13) située dans le réservoir récepteur (7).

5. Appareil de traitement d'eau selon l'une quelconque des revendications précédentes, dans lequel ledit réservoir récepteur (7) comprend un dispositif d'agitation pour mélanger l'eau traitée reçue.

6. Appareil de traitement d'eau selon l'une quelconque des revendications précédentes, comprenant en outre une unité de commande (40) et un capteur (42), tel qu'un capteur optique, en connexion fonctionnelle avec l'unité de commande (40), dans lequel ledit capteur (42) est situé à proximité dudit orifice d'entrée (3) et est configuré pour détecter un niveau de turbidité des eaux pluviales, et dans lequel ladite unité de commande (40) est configurée pour récupérer des données comprenant des informations concernant ledit niveau de turbidité à partir du capteur (42).

7. Appareil de traitement d'eau selon l'une quelconque des revendications précédentes, comprenant en outre un dispositif d'actionnement (41), dans lequel ledit dispositif d'actionnement est agencé pour agir sur ladite surface de contact (5), afin d'ajuster l'inclinaison de la surface de contact (5).

8. Appareil de traitement d'eau selon la revendication 7, dans lequel le dispositif d'actionnement (41) est en connexion fonctionnelle avec l'unité de commande (40), ledit dispositif d'actionnement (41) étant agencé pour agir sur ladite surface de contact (5) sur la base d'une entrée provenant de ladite unité de commande (40).

9. Appareil de traitement de l'eau selon la revendication 7 ou 8 telle que dépendante de la revendication 7, dans lequel ladite unité de commande (40) est en outre configurée pour commander ledit dispositif d'actionnement (41) sur la base desdites informations récupérées dudit capteur (42) concernant ledit niveau de turbidité.

10. Système de traitement d'eau pour le traitement des eaux pluviales, ledit système de traitement comprenant : un appareil de traitement d'eau (1) selon l'une quelconque des revendications précédentes ; et
au moins une unité de purification ayant un corps définissant une pluralité de pores et contenant un agent floculant hydrosoluble, ladite au moins une unité de purification étant disposée sur ladite surface de contact et fixée audit élément de fixation ;
un réservoir de décantation ; et
une pompe de décharge pour transporter l'eau traitée depuis ledit réservoir récepteur (7) vers ledit réservoir de décantation.

11. Système de traitement d'eau selon la revendication 10, comprenant en outre au moins une unité d'augmentation de pH ayant un corps définissant une pluralité de pores et contenant du bicarbonate de sodium, ladite au moins une unité d'augmentation de pH étant située dans le réservoir récepteur (7).

12. Procédé de contrôle d'une vitesse de dissolution d'un agent floculant hydrosoluble dans des eaux pluviales, ledit procédé comprenant les étapes consistant à :
fournir un appareil de traitement d'eau (1) selon l'une quelconque des revendications 1 à 9 ;
et au moins une unité de purification (10) ayant un corps définissant une pluralité de pores et contenant l'agent floculant hydrosoluble ;
positionner ladite au moins une unité de purification (10) sur la surface de contact (5) et fixer ladite au moins une unité de purification (10) audit au moins un élément de fixation (6) ;
fournir un écoulement d'eaux pluviales audit orifice d'entrée (3) ;
commander l'inclinaison de ladite surface de contact (5) par rapport à un plan horizontal afin de contrôler une vitesse de dissolution de l'agent floculant lorsque ledit écoulement d'eaux pluviales s'écoule à travers ledit bac de réception (2) sur ladite surface de contact (5).

13. Procédé selon la revendication 12, dans lequel l'appareil de traitement d'eau comprend en outre au moins un, et de préférence un ensemble de, bras de détournement (12), et dans lequel le procédé comprend en outre l'étape consistant à :
positionner le(s) bras(s) de détournement (12) pour diriger l'écoulement des eaux pluviales.

14. Procédé selon l'une quelconque des revendications 12 et 13, dans lequel ledit agent floculant comprend du sel de chitosane.
